# EUROPEAN PATENT APPLICATION

(11) **EP 4 564 892 A1**
(43) Date of publication of application: **04.06.2025**
(21) Application number: 23845394.8
(22) Date of filing: 19.07.2023
(51) Int. Cl.: H04W 24/08

(54) **GAP CONFIGURATION METHOD AND APPARATUS, AND TERMINAL AND NETWORK-SIDE DEVICE**

(30) Priority: 25.07.2022 CN 202210878938
(71) Applicant: Vivo Mobile Communication Co., Ltd., Dongguan, Guangdong 523863 (CN)
(72) Inventor: LIU, Xuanbing, Dongguan, Guangdong 523863 (CN); YANG, Xiaodong, Dongguan, Guangdong 523863 (CN); WEI, Xusheng, Dongguan, Guangdong 523863 (CN)
(74) Representative: Shieldmark
(86) International application number: PCT/CN2023/108048
(87) International publication number: WO 2024/022183

(57) **Abstract**

This application discloses a gap configuration method and apparatus, a terminal, and a network-side device, and pertains to the field of mobile communication. The gap configuration method includes: A terminal sends first information to a network-side device, where the first information indicates the terminal's priority preference information for a gap.

## Description

### CROSS-REFERENCE TO RELATED APPLICATIONS

The present invention claims priority to Chinese Patent Application No. 202210878938.8, filed with the China National Intellectual Property Administration on July 25, 2022 and entitled "GAP CONFIGURATION METHOD AND APPARATUS, TERMINAL, AND NETWORK-SIDE DEVICE", which is incorporated herein by reference in its entirety.

### TECHNICAL FIELD

This application pertains to the field of mobile communication technologies, and specifically relates to a gap configuration method and apparatus, a terminal, and a network-side device.

### BACKGROUND

In a related technology, a plurality of concurrent gap patterns (Gap Pattern) may be configured for a terminal (also referred to as user equipment (User Equipment, UE)), and each measurement pattern includes a plurality of gaps (Gap) used for measurement. In this case, a plurality of gaps may conflict at a specific point in time.

In view of this, a priority solution for concurrent gaps (Concurrent Gap) is introduced. When a gap conflict occurs, which gap is reserved and which gap is discarded are determined based on priorities.

However, because priority configurations of gaps are fixed relatively, understandings of requirements for measurement performance cannot be reconciled between a network side and a terminal, and consequently gaps cannot be fully utilized, resulting in a further reduction in a throughput and an increase in a time used for measuring a related measurement object.

### SUMMARY

Embodiments of this application provide a gap configuration method and apparatus, a terminal, and a network-side device, to resolve a problem that understandings of requirements for measurement performance cannot be reconciled between a network side and a terminal, and consequently gaps cannot be fully utilized, resulting in a further reduction in a throughput and an increase in a time used for measuring a related measurement object.

According to a first aspect, a gap configuration method is provided. The method is used on a terminal and includes:
sending, by a terminal, first information to a network-side device, where the first information indicates the terminal's priority preference information for a gap.

According to a second aspect, a gap configuration apparatus is provided, including:
a first execution module, configured to determine priority preference information for a gap; and
a first transmission module, configured to send first information to a network-side device, where the first information indicates the priority preference information for the gap.

According to a third aspect, a gap configuration method is provided. The method is used on a network-side device and includes:
receiving, by a network-side device, first information from a terminal, where the first information indicates the terminal's priority preference information for a gap.

According to a fourth aspect, a gap configuration apparatus is provided, including:
a second transmission module, configured to receive first information from a terminal; and
a second execution module, configured to determine the terminal's priority preference information for a gap from the first information.

According to a fifth aspect, a terminal is provided. The terminal includes a processor and a memory. The memory stores a program or instructions that can be run on the processor. When the program or instructions are executed by the processor, steps in the method according to the first aspect are performed.

According to a sixth aspect, a terminal is provided, including a processor and a communication interface. The processor is configured to determine priority preference information for a gap. The communication interface is configured to send first information to a network-side device, where the first information indicates the priority preference information for the gap.

According to a seventh aspect, a network-side device is provided. The network-side device includes a processor and a memory. The memory stores a program or instructions that can be run on the processor. When the program or instructions are executed by the processor, steps in the method according to the first aspect are performed.

According to an eighth aspect, a network-side device is provided, including a processor and a communication interface. The processor is configured to determine a terminal's priority preference information for a gap from first information. The communication interface is configured to receive the first information from the terminal.

According to a ninth aspect, a gap configuration system is provided, including a terminal and a network-side device. The terminal may be configured to perform steps in the gap configuration method according to the first aspect. The network-side device may be configured to perform steps in the gap configuration method according to the third aspect.

According to a tenth aspect, a readable storage medium is provided. The readable storage medium stores a program or instructions. When the program or instructions are executed by a processor, steps in the method according to the first aspect or steps in the method according to the third aspect are performed.

According to an eleventh aspect, a chip is provided. The chip includes a processor and a communication interface. The communication interface is coupled to the processor. The processor is configured to run a program or instructions, to implement the method according to the first aspect or the method according to the third aspect.

According to a twelfth aspect, a computer program/program product is provided. The computer program/program product is stored in a storage medium. The computer program/program product is executed by at least one processor to perform steps in the gap configuration method according to the first aspect or steps in the gap configuration method according to the third aspect.

In embodiments of this application, the terminal sends the first information to the network-side device, to better assist the network-side device in configuring a priority of a gap for the terminal, better resolving a gap conflict problem and improving utilization of gaps, where the first information indicates the terminal's priority preference information for the gap, and is used for negotiating importance, a use, and the like of the gap with the network-side device.

### BRIEF DESCRIPTION OF THE DRAWINGS

FIG. 1 is a diagram of a structure of a wireless communication system to which embodiments of this application are applicable;
FIG. 2 is a schematic flowchart of a gap configuration method according to an embodiment of this application;
FIG. 3 is a schematic flowchart of another gap configuration method according to an embodiment of this application;
FIG. 4 is a schematic flowchart of another gap configuration method according to an embodiment of this application;
FIG. 5 is a diagram of a structure of a gap configuration apparatus according to an embodiment of this application;
FIG. 6 is a schematic flowchart of another gap configuration method according to an embodiment of this application;
FIG. 7 is a diagram of a structure of another gap configuration apparatus according to an embodiment of this application;
FIG. 8 is a diagram of a structure of a communication device according to an embodiment of this application;
FIG. 9 is a diagram of a structure of a terminal that implements an embodiment of this application; and
FIG. 10 is a diagram of a structure of a network-side device that implements an embodiment of this application.

### DETAILED DESCRIPTION

The following clearly describes the technical solutions in embodiments of this application with reference to the accompanying drawings in embodiments of this application. It is clear that the described embodiments are some rather than all of embodiments of this application. All other embodiments obtained by persons of ordinary skill in the art based on embodiments of this application all fall within the protection scope of this application.

In the specification and claims of this application, the terms such as "first" and "second" are intended to distinguish between similar objects but not to describe a particular order or sequence. It should be understood that the terms used in this way are interchangeable in appropriate circumstances, so that embodiments of this application can be implemented in an order other than the orders illustrated or described herein. In addition, objects distinguished between by "first" and "second" are usually of a same category, and a quantity of objects is not limited. For example, there may be one or more first objects. In addition, in the specification and claims, "and/or" indicates at least one of the connected objects, and the character "/" generally indicates an "or" relationship between the contextually associated objects.

It should be noted that the technologies described in embodiments of this application are not limited to being used in long term evolution (Long Term Evolution, LTE)/LTE-advanced (LTE-Advanced, LTE-A) systems, and may also be used in other wireless communication systems such as code division multiple access (Code Division Multiple Access, CDMA) systems, time division multiple access (Time Division Multiple Access, TDMA) systems, frequency division multiple access (Frequency Division Multiple Access, FDMA) systems, orthogonal frequency division multiple access (Orthogonal Frequency Division Multiple Access, OFDMA) systems, single-carrier frequency division multiple access (Single-carrier Frequency Division Multiple Access, SC-FDMA) systems, and other systems. The terms "system" and "network" in embodiments of this application are usually used interchangeably. The technologies described can be used in the systems and radio technologies mentioned above, and can also be used in other systems and radio technologies. The following uses a new radio (New Radio, NR) system as an example, and NR terms are used in most of the following descriptions. However, these technologies can also be used in applications other than NR system applications, for example, a 6th generation (6th Generation, 6G) communication system.

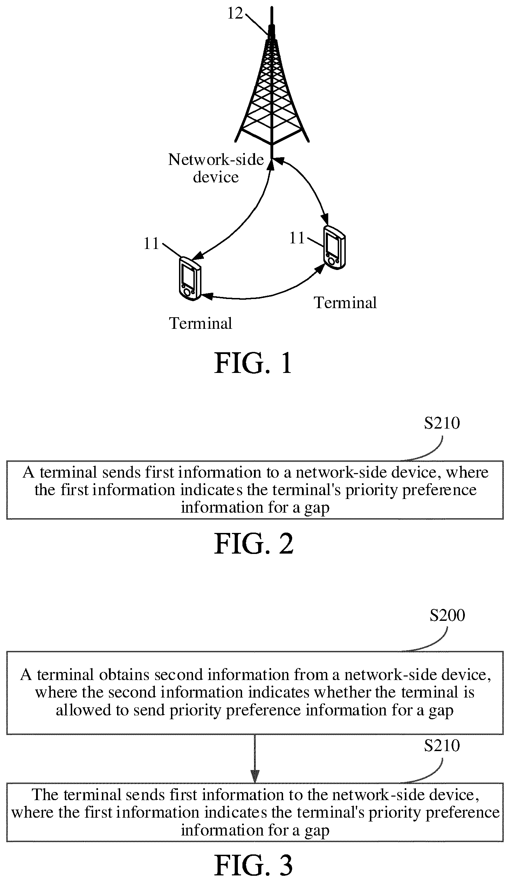

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) which is also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device with wireless communication functionality, for example, a refrigerator, a TV, a washing machine, or furniture), a game console, a personal computer (personal computer, PC), a teller machine, or a self-service machine. A wearable device includes a smart watch, a smart band, smart earphones, smart glasses, smart jewelry (a smart bracelet, a smart ring, a smart necklace, a smart anklet, and the like), a smart wristband, smart clothes, and the like. It should be noted that a specific type of the terminal 11 is not limited in this embodiment of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a Wi-Fi node, or the like. A base station may be referred to as a NodeB, an evolved NodeB (evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. The base station is not limited to a particular technical term, provided that same technical effects are achieved. It should be noted that in this embodiment of this application, only a base station in an NR system is used as an example for description, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in this embodiment of this application, only a core network device in an NR system is used as an example for description, but a specific type of the core network device is not limited.

With reference to the accompanying drawings and by using some embodiments and their application scenarios, the following describes in detail gap configuration methods and apparatuses, a terminal, and a network-side device that are provided in embodiments of this application.

As shown in FIG. 2, an embodiment of this application provides a gap configuration method. The method is performed by a terminal. In other words, the method may be performed by software or hardware installed in a terminal. The method includes the following step.

S210: A terminal sends first information to a network-side device, where the first information indicates the terminal's priority preference information for a gap (Gap Priority Preference).

Optionally, the first information includes at least one piece of priority preference information that is provided by at least one of the following gap objects:
per gap;
feature (feature) or use;
gap type;
gap group; or
gap under a same feature or a same use.

In an implementation, the terminal may send, by using the first information, priority preference information to the network-side device by per gap. The first information may include at least one gap identity (Gap Identity, Gap ID) that indicates a single gap, and priority preference information that corresponds to each single gap, as shown in Table 1 below. The gap identity may be configured by the network-side device or predefined in a protocol.

**Table 1**

| Gap_ID | Priority preference information | Gap use |
|---|---|---|
| ID0 | R0 | Measurement |
| ID1 | R1 | Multi-subscriber identity module |
| ID2 | R2 | Positioning |
| ID3 | R3 | Measurement |
| ID4 | R4 | Measurement |

The single gaps in Table 1 are indicated by gap IDs, including ID0, ID1, ID2, ID3, and ID4, and priority preference information corresponding to the gap IDs is configured, including R0, R1, R2, R3, and R4. Table 1 also provides gap uses corresponding to the gap IDs, including measurement, multi-subscriber identity module (Multi-Subscriber Identity Module, MUSIM), and positioning (Positioning).

The gap may alternatively send gap priority preference information to the network-side device by using gap preference information. The gap preference information may indicate priority preference information corresponding to at least one single gap. The gap preference information may specifically further include a length, a periodicity, a starting time, and the like of a gap. Gap preference information in the first information includes at least one single gap, and priority preference information that corresponds to each single gap, as shown in Table 2 below.

**Table 2**

| Gap in gap preference information | Priority preference information | Gap use |
|---|---|---|
| Gap 1 | R0 | Multi-subscriber identity module |
| Gap 2 | R1 | Multi-subscriber identity module |
| Gap 3 | R2 | Multi-subscriber identity module |
| Gap 4 | R3 | Positioning |
| Gap 5 | R4 | Measurement |

The gaps in the gap preference information in Table 2 include Gap 1, Gap 2, Gap 3, Gap 4, and Gap 5, and priority preference information corresponding to the gaps is configured, including R0, R1, R2, R3, and R4. Table 2 also provides uses corresponding to the gaps, including measurement, multi-subscriber identity module, and positioning.

Optionally, the gap is at least one of the following gaps:
a gap requested by the terminal, where a gap requested by the terminal is a gap that the terminal requests from the network-side device based on a current requirement, and may be a gap that the terminal requests before or after the network-side device performs configuration;
a gap configured by the network-side device, where after obtaining gaps configured by the network-side device, the terminal may send priority preference information for some or all of the configured gaps to the network-side device; or
a gap with a corresponding gap identity, where the terminal selects all or some of gaps with corresponding gap identities obtained in advance, and sends corresponding priority preference information to the network-side device.

In another implementation, the terminal may send, by using the first information, priority preference information to the network-side device by feature (feature) or use. The priority preference information is applicable to a gap with a corresponding feature or use. The gap may be a gap that is requested by the terminal and that has the corresponding feature or use, or may be a gap that is at least one of gaps configured by the network-side device and that has the corresponding feature or use, or may be a gap that is at least one of gaps with gap identities and that has the corresponding feature or use. The first information may include at least one feature or use, and priority preference information that corresponds to each feature or use; or may include at least one feature identity or use identity that indicates a feature or use, and priority preference information that corresponds to each feature identity or use identity, as shown in Table 3 below.

**Table 3**

| Gap feature | Priority preference information | Gap use |
|---|---|---|
| Feature 1 | R0 | Multi-subscriber identity module |
| Feature 2 | R1 | Positioning |
| Feature 3 | R2 | Measurement |

The features in Table 3 include Feature 1, Feature 2, and Feature 3, and priority preference information corresponding to the features is configured, including R0, R1, and R3. Table 3 also provides gap uses corresponding to the features, including multi-subscriber identity module, positioning, and measurement.

The feature or use may be defined based on an actual requirement, for example, measurement, multi-subscriber identity module, or positioning. In addition, gaps may be further classified into periodic gaps and aperiodic gaps according to periodicity.

In another implementation, gaps are classified to determine gap types, and the terminal may send, by using the first information, priority preference information to the network-side device by gap type. The priority preference information is applicable to a gap of a corresponding gap type. The first information may include at least one gap type or at least one type identity that indicates a gap type, and priority preference information that corresponds to each gap type or type identity.

Optionally, the gap type is one of the following:
a first type, where a gap corresponding to the first type is a per-terminal gap, which may be expressed as a per-UE gap;
a second type, where a gap corresponding to the second type is a per-frequency-range-1 (Frequency Range 1, FR1) gap, which may be expressed as a per-FR1 gap;
a third type, where a gap corresponding to the third type is a per-frequency-range-2 (Frequency Range 2, FR2) gap, which may be expressed as a per-FR2 gap;
a fourth type, where a gap corresponding to the fourth type is an uplink (Uplink, UL)-related gap, which may be expressed as a UL gap; or
a fifth type, where a gap corresponding to the fifth type is a downlink (Downlink, DL)-related gap, which may be expressed as a DL gap.

In another implementation, gaps are grouped to determine gap groups, and the terminal may send, by using the first information, priority preference information to the network-side device by gap group. The priority preference information is applicable to a gap in a corresponding gap group. The first information may include at least one gap group or at least one group identity that indicates a gap group, and priority preference information that corresponds to each gap group or group identity.

In another implementation, the terminal may send, by using the first information, priority preference information to the network-side device by per gap under a same feature or a same use. The first information may include at least one gap ID that indicates a single gap or at least one piece of gap preference information that indicates a single gap, and priority preference information that corresponds to each single gap, where the single gaps have a same feature or use, as shown in Table 4 below.

**Table 4**

| Gap in gap preference information | Priority preference information | Gap use |
|---|---|---|
| Gap 1 | R0 | Multi-subscriber identity module |
| Gap 2 | R1 | Multi-subscriber identity module |
| Gap 3 | R2 | Multi-subscriber identity module |

The single gaps in Table 4 all have the same feature of multi-subscriber identity module and are indicated by the gap preference information, including Gap 1, Gap 2, and Gap 3, where two gaps may be periodic gaps, and another one is an aperiodic gap. In addition, priority preference information corresponding to the single gaps is configured, including R0, R1, and R2. Table 4 also provides the same gap use corresponding to the single gaps: multi-subscriber identity module.

Optionally, the priority preference information includes at least one of the following:
a preferred priority level, where priorities are divided into a plurality of levels that are sorted in descending order, for example, a high priority and a low priority, or for another example, R0 to R5 shown in Table 1 to Table 4 above respectively indicating corresponding levels; or
a preferred priority value, where priorities are determined based on priority values, for example, a value range [0, 15] of priority values indicating a total of 16 priority values, a smaller priority value indicating a higher priority, and R0 to R5 shown in Table 1 to Table 4 respectively corresponding to priority values 0 to 5.

Optionally, the first information is carried by a bitmap (bitmap), and each bit in the bitmap indicates priority preference information corresponding to a gap object in the first information. To be specific, each bit corresponds to one of the following:
a single gap, where the single gap may be a gap requested by the terminal, a gap configured by the network-side device, or a gap that is sorted in ascending or descending order of existing gap IDs;
a feature or use;
a gap type;
a gap group; or
a single gap under a same feature or a same use.

Optionally, the priority preference information included in the first information meets at least one of the following:
Different gaps correspond to different priority preference information: When the first information includes priority preference information corresponding to a plurality of single gaps, different priority preference information needs to be configured for different single gaps. As shown in Table 1, different gap IDs correspond to different priority preference information. As shown in Table 2, different gap preference information corresponds to different priority preference information. For example, for a maximum of 16 priority values, the first information may indicate a maximum of 16 single gaps that correspond to different priority values.

Gaps with different features or different uses correspond to different priority preference information: When the first information includes priority preference information corresponding to a plurality of features or uses, different priority preference information needs to be configured for different features or different uses in the first information. As shown in Table 3, different features correspond to different priority preference information.

Gaps of different gap types correspond to different priority preference information: When the first information includes priority preference information corresponding to a plurality of gap types, different priority preference information needs to be configured for different gap types in the first information.

Gaps in different gap groups correspond to different priority preference information: When the first information includes priority preference information corresponding to a plurality of gap groups, different priority preference information needs to be configured for different gap groups in the first information.

Different gaps under a same feature or a same use correspond to different priority preference information: When the first information includes priority preference information corresponding to a plurality of single gaps under a same feature or a same use, different priority preference information needs to be configured for different single gaps under the same feature or the same use in the first information. As shown in Table 4, different single gaps under the same feature or the same use correspond to different priority preference information.

Optionally, when the first information includes a first gap object but does not include priority preference information corresponding to the first gap object, that is, the terminal does not configure priority preference information for the first gap object in the first information, the priority preference information for the first gap object may be indicated in a default manner. The priority preference information for the first gap object may be a preset default priority level or default priority value. For example, the default priority level may be a high priority or a low priority, and the default priority value may be 0 or 15.

Optionally, for a gap object not indicated in the first information, it indicates that the terminal does not have priority preference information for the gap object that is not indicated.

It should be understood that an occasion at which the first information is sent may be set based on an actual requirement. The first information may be sent to the network-side device before the network-side device configures a priority of a gap for the terminal. In this case, the network-side device configures the priority of the gap for the terminal based on the terminal's priority preference information for the gap in the first information.

Alternatively, the first information may be sent to the network-side device after the network-side device already configures a priority of a gap for the terminal. In this case, the network-side device may determine, based on the terminal's priority preference information for the gap in the first information, whether to reconfigure the priority of the gap for the terminal.

Optionally, the first information is carried by at least one of the following messages:
terminal assistance information (UE Assistance Information);
a radio resource control (Radio Resource Control, RRC) reconfiguration complete (Reconfiguration Complete) message; or
a radio resource control resume complete (RRC Resume Complete) message.

The following describes an example procedure of the gap configuration method by using an example in which the RRC reconfiguration complete message carries the first information.

A1: A terminal is in RRC connected mode.

A2: The terminal receives an RRC reconfiguration message from a network-side device. The RRC reconfiguration message may include third information, which is used for configuring a priority of a gap for the terminal.

A3: The terminal sends an RRC reconfiguration complete message to the network-side device. The RRC reconfiguration complete message may include first information, which indicates, to the network-side device, the terminal's priority preference information for a gap. Specific content may be shown in Table 1 to Table 4 above.

It can be learned from the technical solution in the foregoing embodiment that in this embodiment of this application, the terminal sends the first information to the network-side device, to better assist the network-side device in configuring a priority of a gap for the terminal, better resolving a gap conflict problem and improving utilization of gaps, where the first information indicates the terminal's priority preference information for the gap, and is used for negotiating importance, a use, and the like of the gap with the network-side device.

Based on the foregoing embodiment, optionally, as shown in FIG. 3, before step S210, the method further includes the following step.

Step S200: The terminal obtains second information from the network-side device, where the second information includes a configuration of allowing/disallowing sending of priority preference information for a gap by the terminal, and indicates whether the terminal is allowed to send priority preference information for a gap.

Optionally, the second information includes at least one of the following:
an indication that indicates whether the terminal is allowed to send priority preference information for a gap, for example, a 1-bit (bit) indication;
one or more gap objects for which the terminal is allowed to send corresponding priority preference information, for example, the feature multi-subscriber identity module and the feature positioning;
a selection range for priority levels and/or priority values in the priority preference information, where a specified selection range may indicate the terminal to send priority preference information only for a gap with a high priority or a small priority value; or
configuration information for a first timer, configured to indicate the terminal to send the first information when the first timer is not running or after the timer expires, and/or to indicate the terminal to start the first timer after sending the first information.

Optionally, the second information is carried by a radio resource control reconfiguration message. The example procedure in the foregoing embodiment is used as an example. The RRC reconfiguration message in step A2 may further include the second information. If the second information indicates that the terminal is allowed to send priority preference information for a gap, step A3 is performed; if the second information indicates that the terminal is not allowed to send priority information for a gap, step A3 is not performed; or if the second information includes configuration information for a relationship, the terminal may start the first timer after sending the first information, and perform step A3 after the first timer expires.

It can be learned from the technical solution in the foregoing embodiment that in this embodiment of this application, the terminal obtains the second information from the network-side device, and determines whether to send priority preference information for a gap based on the second information, so that the terminal can send priority preference information for a gap according to a requirement of the network-side device, to better assist the network-side device in configuring a priority of a gap for the terminal, better resolving the gap conflict problem and improving utilization of gaps.

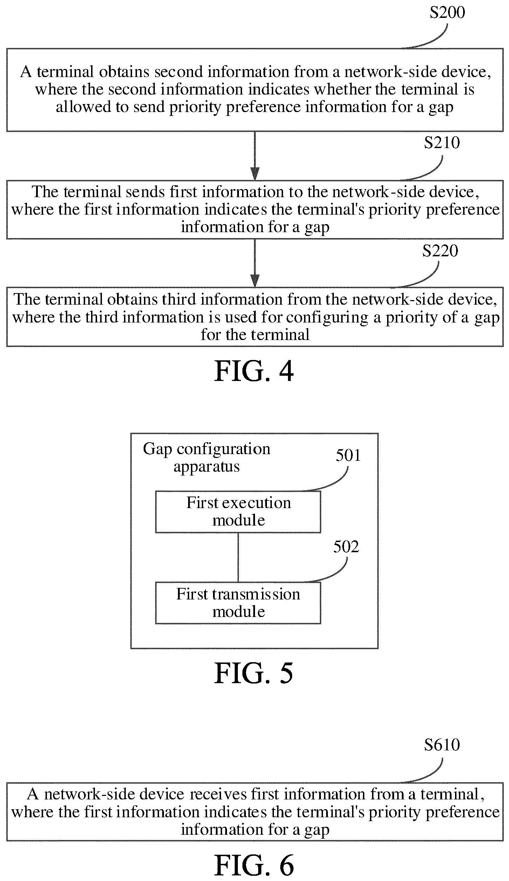

Based on the foregoing embodiment, optionally, as shown in FIG. 4, the method further includes the following step.

Step S220: The terminal obtains third information from the network-side device, where the third information is used for configuring a priority of a gap for the terminal.

The third information may be used for configuring, for the terminal, a priority level or priority value corresponding to the at least one gap object.

Step S220 may be performed before or after step S210. In this embodiment of this application, only an example is used for description in which step S220 is performed after step S210.

After receiving the first information, the network-side device may send the third information to the terminal based on the first information. The priority of the gap configured for the terminal may be consistent or maintain a same priority relationship with the terminal's priority preference information for the gap in the first information. For example, the first information includes priority preference information of a gap object A, and a priority needs to be configured for a gap B for the terminal by using the third information. If there is a correspondence between the gap object A and the gap B, including that the gap object A is the gap B, or the gap object A is a feature or use corresponding to the gap B, or the gap object A is a gap type corresponding to the gap B, or the gap object A is a gap group including the gap B, or the like, the priority configured for the gap B for the terminal by using the third information needs to match the priority preference information of the gap object A.

It should be understood that matching may be understood as being consistent, maintaining a same priority relationship, or the like. The gap B and the gap object A between which there is a correspondence are used as an example. In the example, a priority level or priority value that is the same as or close to a priority level or priority value of the gap object A may be configured for the gap B, or a priority value may be configured for the gap B based on a priority level of the gap object A, or a priority level may be configured for the gap B based on a priority value of the gap object A.

Optionally, after receiving the first information, the network-side device may send the third information to the terminal based on a high-priority condition and priority preference information that corresponds to a gap object meeting the high-priority condition and that is in the first information. Specifically, after receiving the first information, the network-side device may perform at least one of the following:
ignoring, by the network-side device, a gap that corresponds to a gap object not meeting the high-priority condition and that is in the first information;
skipping, by the network-side device, configuring a gap that corresponds to a gap object not meeting the high-priority condition for the terminal; or
preferentially configuring, by the network-side device, a gap that corresponds to a gap object meeting the high-priority condition for the terminal.

The high-priority condition is at least one of the following:
a priority level corresponding to the gap object is higher than a first level; or
a priority value corresponding to the gap object is lower than a first threshold.

It can be learned from the foregoing embodiment that in this embodiment of this application, the network-side device configures the priority of the gap for the terminal based on the first information, better assisting the network-side device in configuring a priority of a gap for the terminal, better resolving the gap conflict problem, and improving utilization of gaps.

The gap configuration method provided in the embodiment of this application may be performed by a gap configuration apparatus. In an embodiment of this application, a gap configuration apparatus provided in the embodiment of this application is described by using an example in which the gap configuration apparatus performs the gap configuration method.

As shown in FIG. 5, the gap configuration apparatus includes a first execution module 501 and a first transmission module 502.

The first execution module 501 is configured to determine priority preference information for a gap. The first transmission module 502 is configured to send first information to a network-side device, where the first information indicates the priority preference information for the gap.

Optionally, the first information includes at least one piece of priority preference information that is provided by at least one of the following gap objects:
per gap;
feature or use;
gap type;
gap group; or
per gap under a same feature or a same use.

Optionally, the gap type is one of the following:
a first type, where a gap corresponding to the first type is a per-terminal gap;
a second type, where a gap corresponding to the second type is a per-frequency-range-1 gap;
a third type, where a gap corresponding to the third type is a per-frequency-range-2 gap;
a fourth type, where a gap corresponding to the fourth type is an uplink-related gap; or
a fifth type, where a gap corresponding to the fifth type is a downlink-related gap.

Optionally, the priority preference information includes at least one of the following:
a preferred priority level; or
a preferred priority value.

Optionally, the first information is carried by a bitmap, and each bit in the bitmap indicates priority preference information corresponding to a gap object.

Optionally, the gap is at least one of the following gaps:
a gap requested by the gap configuration apparatus;
a gap configured by the network-side device; or
a gap with a corresponding gap identity.

Optionally, the priority preference information included in the first information meets at least one of the following:
different gaps correspond to different priority preference information;
gaps with different features or different uses correspond to different priority preference information;
gaps of different gap types correspond to different priority preference information;
gaps in different gap groups correspond to different priority preference information; or
different gaps under a same feature or a same use correspond to different priority preference information.

Optionally, when the first information does not include priority preference information corresponding to a first gap object, the priority preference information corresponding to the first gap object is a default priority level or priority value.

Optionally, the first information is carried by at least one of the following messages:
terminal assistance information;
a radio resource control reconfiguration complete message; or
a radio resource control resume complete message.

It can be learned from the technical solution in the foregoing embodiment that in this embodiment of this application, the gap configuration apparatus sends the first information to the network-side device, to better assist the network-side device in configuring a priority of a gap, better resolving a gap conflict problem and improving utilization of gaps, where the first information indicates the terminal's priority preference information for the gap, and is used for negotiating importance, a use, and the like of the gap with the network-side device.

Based on the foregoing embodiment, optionally, the first transmission module 502 is further configured to obtain second information from the network-side device. The second information indicates whether the gap configuration apparatus is allowed to send priority preference information for a gap.

Optionally, the second information includes at least one of the following:
an indication that indicates whether the gap configuration apparatus is allowed to send priority preference information for a gap;
a gap object for which the gap configuration apparatus is allowed to send corresponding priority preference information;
a selection range for priority levels and/or priority values in the priority preference information; or
configuration information for a first timer, configured to indicate the terminal to send the first information when the first timer is not running or after the timer expires, and/or to indicate the terminal to start the first timer after sending the first information.

Optionally, the second information is carried by a radio resource control reconfiguration message.

It can be learned from the technical solution in the foregoing embodiment that in this embodiment of this application, the gap configuration apparatus obtains the second information from the network-side device, and determines whether to send priority preference information for a gap based on the second information, so that the terminal can send priority preference information for a gap according to a requirement of the network-side device, to better assist the network-side device in configuring a priority of a gap, better resolving the gap conflict problem and improving utilization of gaps.

Based on the foregoing embodiment, optionally, the first transmission module 502 is further configured to obtain third information from the network-side device. The third information is used for configuring a priority of a gap for the gap configuration apparatus.

Optionally, the priority of the gap configured for the gap configuration apparatus is consistent or has a same priority relationship with the gap configuration apparatus's priority preference information for the gap.

It can be learned from the foregoing embodiment that in this embodiment of this application, the network-side device configures the priority of the gap based on the first information, better assisting the network-side device in configuring a priority of a gap, better resolving the gap conflict problem, and improving utilization of gaps.

The gap configuration apparatus in this embodiment of this application may be an electronic device, for example, an electronic device with an operating system, or may be a component in an electronic device, for example, an integrated circuit or a chip. The electronic device may be a terminal, or may be another device other than a terminal. For example, a terminal may be of but is not limited to the types of the terminal 11 listed above, and another device may be a server, a network attached storage (Network Attached Storage, NAS), or the like. This is not specifically limited in this embodiment of this application.

The gap configuration apparatus provided in this embodiment of this application can perform the procedures implemented in the method embodiment in FIG. 2 to FIG. 5 and achieve same technical effects. To avoid repetition, details are not described herein again.

As shown in FIG. 6, an embodiment of this application provides a gap configuration method. The method is performed by a network-side device. In other words, the method may be performed by software or hardware installed in a network-side device. The method includes the following step.

S610: A network-side device receives first information from a terminal, where the first information indicates the terminal's priority preference information for a gap.

Optionally, the first information includes at least one piece of priority preference information that is provided by at least one of the following gap objects:
per gap;
feature or use;
gap type;
gap group; or
per gap under a same feature or a same use.

Optionally, the gap type is one of the following:
a first type, where a gap corresponding to the first type is a per-terminal gap;
a second type, where a gap corresponding to the second type is a per-frequency-range-1 gap;
a third type, where a gap corresponding to the third type is a per-frequency-range-2 gap;
a fourth type, where a gap corresponding to the fourth type is an uplink-related gap; or
a fifth type, where a gap corresponding to the fifth type is a downlink-related gap.

Optionally, the priority preference information includes at least one of the following:
a preferred priority level; or
a preferred priority value.

Optionally, the first information is carried by a bitmap, and each bit in the bitmap indicates priority preference information corresponding to a gap object.

Optionally, the gap is at least one of the following gaps:
a gap requested by the terminal;
a gap configured by the network-side device; or
a gap with a corresponding gap identity.

Optionally, the priority preference information included in the first information meets at least one of the following:
different gaps correspond to different priority preference information;
gaps with different features or different uses correspond to different priority preference information;
gaps of different gap types correspond to different priority preference information;
gaps in different gap groups correspond to different priority preference information; or
different gaps under a same feature or a same use correspond to different priority preference information.

Optionally, when the first information does not include priority preference information corresponding to a first gap object, the priority preference information corresponding to the first gap object is a default priority level or priority value.

Optionally, the first information is carried by at least one of the following messages:
terminal assistance information;
a radio resource control reconfiguration complete message; or
a radio resource control resume complete message.

In step S610, the method embodiment shown in FIG. 2 can be implemented, and same technical effects can be obtained. Repeated parts are not described herein again.

It can be learned from the technical solution in the foregoing embodiment that in this embodiment of this application, the network-side device receives the first information from the terminal, and therefore can better configure a priority of a gap for the terminal, better resolving a gap conflict problem and improving utilization of gaps, where the first information indicates the terminal's priority preference information for the gap.

Based on the foregoing embodiment, optionally, before step S610, the method further includes the following step.

The network-side device sends second information to the terminal, where the second information indicates whether the terminal is allowed to send priority preference information for a gap.

Optionally, the second information includes at least one of the following:
an indication that indicates whether the terminal is allowed to send priority preference information for a gap;
a gap object for which the terminal is allowed to send corresponding priority preference information;
a selection range for priority levels and/or priority values in the priority preference information; or
configuration information for a first timer, configured to indicate the terminal to send the first information when the first timer is not running or after the timer expires, and/or to indicate the terminal to start the first timer after sending the first information.

Optionally, the second information is carried by a radio resource control reconfiguration message.

In this embodiment of this application, the method embodiment shown in FIG. 3 can be implemented, and same technical effects can be obtained. Repeated parts are not described herein again.

It can be learned from the technical solution in the foregoing embodiment that in this embodiment of this application, the network-side device sends the second information to the terminal, and therefore can request, based on a requirement, the terminal to send priority preference information for a gap, better assisting in configuring a priority of a gap for the terminal, better resolving the gap conflict problem, and improving utilization of gaps, where the second information is used to indicate to the terminal whether the terminal sends priority preference information for a gap.

Based on the foregoing embodiment, optionally, the method further includes the following step.

The network-side device sends third information to the terminal, where the third information is used for configuring a priority of a gap for the terminal.

Optionally, the priority of the gap configured for the terminal is consistent or has a same priority relationship with the terminal's priority preference information for the gap.

Optionally, the sending, by the network-side device, third information to the terminal includes:
sending, by the network-side device, the third information to the terminal based on priority preference information that corresponds to a gap object meeting a high-priority condition and that is in the first information, where
the high-priority condition is at least one of the following:
   a priority level corresponding to the gap object is higher than a first level; or
   a priority value corresponding to the gap object is lower than a first threshold.

Optionally, the sending, by the network-side device, the third information to the terminal based on priority preference information that corresponds to a gap object meeting a high-priority condition and that is in the first information includes performing at least one of the following:
ignoring, by the network-side device, a gap that corresponds to a gap object not meeting the high-priority condition and that is in the first information;
skipping, by the network-side device, configuring a gap that corresponds to a gap object not meeting the high-priority condition for the terminal; or
preferentially configuring, by the network-side device, a gap that corresponds to a gap object meeting the high-priority condition for the terminal.

In this embodiment of this application, the method embodiment shown in FIG. 4 can be implemented, and same technical effects can be obtained. Repeated parts are not described herein again.

It can be learned from the technical solution in the foregoing embodiment that in this embodiment of this application, the network-side device configures the priority of the gap for the terminal based on the first information, better assisting in configuring a priority of a gap for the terminal, better resolving the gap conflict problem, and improving utilization of gaps.

The gap configuration method provided in the embodiment of this application may be performed by a gap configuration apparatus. In an embodiment of this application, a gap configuration apparatus provided in the embodiment of this application is described by using an example in which the gap configuration apparatus performs the gap configuration method.

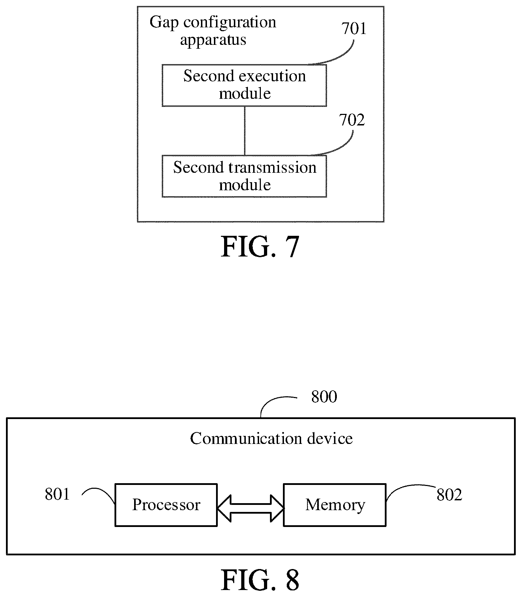

As shown in FIG. 7, the gap configuration apparatus includes a second execution module 701 and a second transmission module 702.

The second transmission module 702 is configured to receive first information from a terminal. The second execution module 701 is configured to determine the terminal's priority preference information for a gap from the first information.

Optionally, the first information includes at least one piece of priority preference information that is provided by at least one of the following gap objects:
per gap;
feature or use;
gap type;
gap group; or
per gap under a same feature or a same use.

Optionally, the gap type is one of the following:
a first type, where a gap corresponding to the first type is a per-terminal gap;
a second type, where a gap corresponding to the second type is a per-frequency-range-1 gap;
a third type, where a gap corresponding to the third type is a per-frequency-range-2 gap;
a fourth type, where a gap corresponding to the fourth type is an uplink-related gap; or
a fifth type, where a gap corresponding to the fifth type is a downlink-related gap.

Optionally, the priority preference information includes at least one of the following:
a preferred priority level; or
a preferred priority value.

Optionally, the first information is carried by a bitmap, and each bit in the bitmap indicates priority preference information corresponding to a gap object.

Optionally, the gap is at least one of the following gaps:
a gap requested by the terminal;
a gap configured by the gap configuration apparatus; or
a gap with a corresponding gap identity.

Optionally, the priority preference information included in the first information meets at least one of the following:
different gaps correspond to different priority preference information;
gaps with different features or different uses correspond to different priority preference information;
gaps of different gap types correspond to different priority preference information;
gaps in different gap groups correspond to different priority preference information; or
different gaps under a same feature or a same use correspond to different priority preference information.

Optionally, when the first information does not include priority preference information corresponding to a first gap object, the priority preference information corresponding to the first gap object is a default priority level or priority value.

Optionally, the first information is carried by at least one of the following messages:
terminal assistance information;
a radio resource control reconfiguration complete message; or
a radio resource control resume complete message.

It can be learned from the technical solution in the foregoing embodiment that in this embodiment of this application, the gap configuration apparatus receives the first information from the terminal, and therefore can better configure a priority of a gap for the terminal, better resolving a gap conflict problem and improving utilization of gaps, where the first information indicates the terminal's priority preference information for the gap.

Based on the foregoing embodiment, optionally, the second transmission module 702 is further configured to send second information to the terminal. The second information indicates whether the terminal is allowed to send priority preference information for a gap.

Optionally, the second information includes at least one of the following:
an indication that indicates whether the terminal is allowed to send priority preference information for a gap;
a gap object for which the terminal is allowed to send corresponding priority preference information;
a selection range for priority levels and/or priority values in the priority preference information; or
configuration information for a first timer, configured to indicate the terminal to send the first information when the first timer is not running or after the timer expires, and/or to indicate the terminal to start the first timer after sending the first information.

Optionally, the second information is carried by a radio resource control reconfiguration message.

It can be learned from the technical solution in the foregoing embodiment that in this embodiment of this application, the gap configuration apparatus sends the second information to the terminal, and therefore can request, based on a requirement, the terminal to send priority preference information for a gap, better assisting in configuring a priority of a gap for the terminal, better resolving the gap conflict problem, and improving utilization of gaps, where the second information is used to indicate to the terminal whether the terminal sends priority preference information for a gap.

Based on the foregoing embodiment, optionally, the second transmission module 702 is further configured to send third information to the terminal. The third information is used for configuring a priority of a gap for the terminal.

Optionally, the priority of the gap configured for the terminal is consistent or has a same priority relationship with the terminal's priority preference information for the gap.

Optionally, the second transmission module 702 is configured to send the third information to the terminal based on priority preference information that corresponds to a gap object meeting a high-priority condition and that is in the first information, where
the high-priority condition is at least one of the following:
a priority level corresponding to the gap object is higher than a first level; or
a priority value corresponding to the gap object is lower than a first threshold.

Optionally, the second execution module 701 is configured to perform at least one of the following:
ignoring, by the network-side device, a gap that corresponds to a gap object not meeting the high-priority condition and that is in the first information;
skipping, by the network-side device, configuring a gap that corresponds to a gap object not meeting the high-priority condition for the terminal; or
preferentially configuring, by the network-side device, a gap that corresponds to a gap object meeting the high-priority condition for the terminal.

It can be learned from the technical solution in the foregoing embodiment that in this embodiment of this application, the gap configuration apparatus configures the priority of the gap for the terminal based on the first information, better assisting in configuring a priority of a gap for the terminal, better resolving the gap conflict problem, and improving utilization of gaps.

The gap configuration apparatus in this embodiment of this application may be an electronic device, for example, an electronic device with an operating system, or may be a component in an electronic device, for example, an integrated circuit or a chip. The electronic device may be a terminal, or may be another device other than a terminal. For example, a terminal may be of but is not limited to the types of the terminal 11 listed above, and another device may be a server, a network attached storage (Network Attached Storage, NAS), or the like. This is not specifically limited in this embodiment of this application.

The gap configuration apparatus provided in this embodiment of this application can perform the procedures implemented in the method embodiment in FIG. 6 and achieve same technical effects. To avoid repetition, details are not described herein again.

Optionally, as shown in FIG. 8, an embodiment of this application further provides a communication device 800, including a processor 801 and a memory 802. The memory 802 stores a program or instructions that can be run on the processor 801. For example, in a case that the communication device 800 is a terminal, when the program or instructions are executed by the processor 801, the steps in the gap configuration method embodiment are performed, and same technical effects can be achieved. In a case that the communication device 800 is a network-side device, when the program or instructions are executed by the processor 801, the steps in the gap configuration method embodiment are performed, and same technical effects can be achieved. To avoid repetition, details are not described herein again.

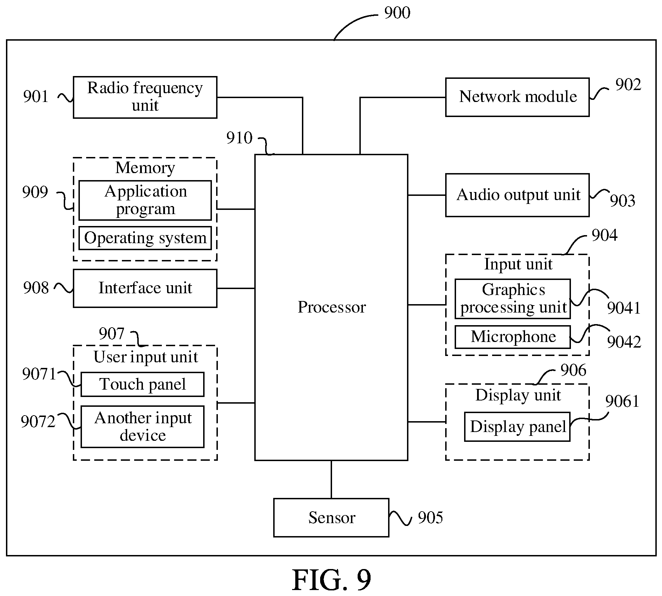

An embodiment of this application further provides a terminal, including a processor and a communication interface. The processor is configured to determine priority preference information for a gap, and the communication interface is configured to send first information to a network-side device, where the first information indicates the priority preference information for the gap. This terminal embodiment corresponds to the method embodiment on a terminal side. The implementation procedures and implementations in the method embodiment may all be applicable to this terminal embodiment, and same technical effects can be achieved. Specifically, FIG. 9 is a diagram of a hardware structure of a terminal that implements an embodiment of this application.

The terminal 900 includes but is not limited to at least some of a radio frequency unit 901, a network module 902, an audio output unit 903, an input unit 904, a sensor 905, a display unit 906, a user input unit 907, an interface unit 908, a memory 909, a processor 910, and the like.

Persons skilled in the art may understand that the terminal 900 may further include a power supply (such as a battery) that supplies power to the components. The power supply may be logically connected to the processor 910 by a power management system, implementing functions such as charging, discharging, and power consumption management by using the power management system. The structure of the terminal shown in FIG. 9 does not constitute a limitation on the terminal. A terminal may include more or fewer components than those shown in the figure, or combine some components, or have different component arrangements. Details are not described herein.

It should be understood that the input unit 904 may include a graphics processing unit (Graphics Processing Unit, GPU) 9041 and a microphone 9042 in this embodiment of this application. The GPU 9041 processes image data of still pictures or videos that are obtained by image capture apparatuses (for example, cameras) in video capture mode or image capture mode. The display unit 906 may include a display panel 9061. The display panel 9061 may be configured in a form of a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but is not limited to, a physical keyboard, a functional button (such as a volume control button or a switch button), a trackball, a mouse, or a joystick. Details are not described herein.

In this embodiment of this application, after receiving downlink data from a network-side device, the radio frequency unit 901 may transmit the data to the processor 910 for processing. In addition, the radio frequency unit 901 may send uplink data to a network-side device. Usually, the radio frequency unit 901 includes, but is not limited to, an antenna, an amplifier, a transceiver, a coupler, a low noise amplifier, a duplexer, and the like.

The memory 909 may be configured to store software programs or instructions, and various data. The memory 909 may mainly include a first storage area in which programs or instructions are stored and a second storage area in which data is stored. In the first storage area, the following may be stored: an operating system, application programs or instructions required by at least one function (for example, a sound playing function or an image display function), and the like. In addition, the memory 909 may include a volatile memory or a non-volatile memory, or may include both a volatile memory and a non-volatile memory. A non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. A volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch Link DRAM, SLDRAM), or a direct rambus random access memory (Direct Rambus RAM, DRRAM). The memory 909 in this embodiment of this application includes, but is not limited to, these memories and any other suitable types of memories.

The processor 910 may include one or more processing units. Optionally, an application processor and a modem processor integrate with the processor 910. The application processor primarily handles operations related to an operating system, user interfaces, application programs, and the like. The modem processor primarily processes wireless communication signals, for example, a baseband processor. It can be understood that the modem processor may alternatively not be integrated into the processor 910.

The radio frequency unit 901 is configured to determine priority preference information for a gap.

The processor 910 is configured to send first information to a network-side device. The first information indicates the priority preference information for the gap.

Optionally, the first information includes at least one piece of priority preference information that is provided by at least one of the following gap objects:
per gap;
feature or use;
gap type;
gap group; or
per gap under a same feature or a same use.

Optionally, the gap type is one of the following:
a first type, where a gap corresponding to the first type is a per-terminal gap;
a second type, where a gap corresponding to the second type is a per-frequency-range-1 gap;
a third type, where a gap corresponding to the third type is a per-frequency-range-2 gap;
a fourth type, where a gap corresponding to the fourth type is an uplink-related gap; or
a fifth type, where a gap corresponding to the fifth type is a downlink-related gap.

Optionally, the priority preference information includes at least one of the following:
a preferred priority level; or
a preferred priority value.

Optionally, the first information is carried by a bitmap, and each bit in the bitmap indicates priority preference information corresponding to a gap object.

Optionally, the gap is at least one of the following gaps:
a gap requested by the terminal;
a gap configured by the network-side device; or
a gap with a corresponding gap identity.

Optionally, the priority preference information included in the first information meets at least one of the following:
different gaps correspond to different priority preference information;
gaps with different features or different uses correspond to different priority preference information;
gaps of different gap types correspond to different priority preference information;
gaps in different gap groups correspond to different priority preference information; or
different gaps under a same feature or a same use correspond to different priority preference information.

Optionally, when the first information does not include priority preference information corresponding to a first gap object, the priority preference information corresponding to the first gap object is a default priority level or priority value.

Optionally, the first information is carried by at least one of the following messages:
terminal assistance information;
a radio resource control reconfiguration complete message; or
a radio resource control resume complete message.

Optionally, the radio frequency unit 901 is further configured to obtain second information from the network-side device. The second information indicates whether the terminal is allowed to send priority preference information for a gap.

Optionally, the second information includes at least one of the following:
an indication that indicates whether the terminal is allowed to send priority preference information for a gap;
a gap object for which the terminal is allowed to send corresponding priority preference information;
a selection range for priority levels and/or priority values in the priority preference information; or
configuration information for a first timer, configured to indicate the terminal to send the first information when the first timer is not running or after the timer expires, and/or to indicate the terminal to start the first timer after sending the first information.

Optionally, the second information is carried by a radio resource control reconfiguration message.

Optionally, the radio frequency unit 901 is further configured to obtain third information from the network-side device. The third information is used for configuring a priority of a gap for the terminal.

Optionally, the priority of the gap configured for the terminal is consistent or has a same priority relationship with the terminal's priority preference information for the gap.

In this embodiment of this application, the priority of the gap can be better configured for the terminal, better resolving a gap conflict problem and improving utilization of gaps.

An embodiment of this application further provides a network-side device, including a processor and a communication interface. The processor is configured to determine a terminal's priority preference information for a gap from first information. The communication interface is configured to receive the first information from the terminal. This network-side device embodiment corresponds to the network-side device method embodiment. The implementation procedures and implementations in the method embodiment may all be applicable to this network-side device embodiment, and same technical effects can be achieved.

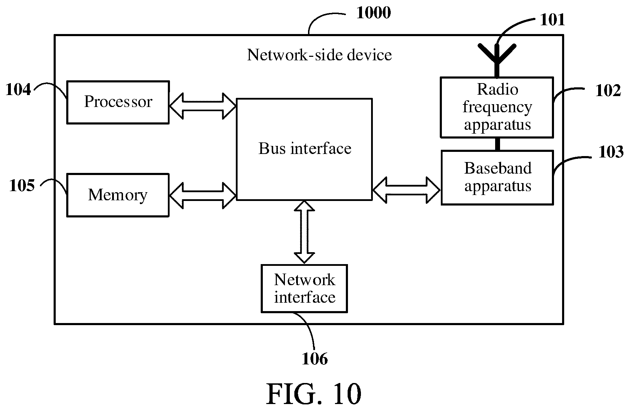

Specifically, an embodiment of this application further provides a network-side device. As shown in FIG. 10, the network-side device 1000 includes: an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information by using the antenna 101 and sends the received information to the baseband apparatus 103 for processing. In a downlink direction, the baseband apparatus 103 processes to-be-sent information and sends processed information to the radio frequency apparatus 102. The radio frequency apparatus 102 receives and processes the information, and sends out processed information by using the antenna 101.

The method performed by the network-side device in the foregoing embodiments may be implemented in the baseband apparatus 103. The baseband apparatus 103 includes a baseband processor.

The baseband apparatus 103 may include, for example, at least one baseband board. A plurality of chips are disposed on the baseband board. As shown in FIG. 10, one of the chips, for example, a baseband processor, is connected to the memory 105 by using a bus interface, to invoke a program in the memory 105 to perform the network device operations shown in the foregoing method embodiments.

The network-side device may further include a network interface 106. The interface is, for example, a common public radio interface (common public radio interface, CPRI).

Specifically, the network-side device 1000 in this embodiment of the present invention further includes instructions or a program that are or is stored in the memory 105 and can be run on the processor 104. The processor 104 invokes the instructions or program in the memory 105 to perform the method performed by the modules shown in FIG. 7, and achieves same technical effects. To avoid repetition, details are not described herein again.

An embodiment of this application further provides a readable storage medium. The readable storage medium stores a program or instructions. When the program or instructions are executed by a processor, the procedures in the foregoing gap configuration method embodiments are performed, and same technical effects can be achieved. To avoid repetition, details are not described herein again.

The processor is the processor in the terminal in the foregoing embodiment. The readable storage medium includes a computer-readable storage medium, for example, a computer read-only memory ROM, a random access memory RAM, a magnetic disk, or a compact disc.

An embodiment of this application further provides a chip. The chip includes a processor and a communication interface. The communication interface is coupled to the processor. The processor is configured to run a program or instructions to implement the procedures in the foregoing gap configuration method embodiments, and can achieve same technical effects. To avoid repetition, details are not described herein again.

It should be understood that the chip mentioned in this embodiment of this application may also be referred to as a system-level chip, a system chip, a chip system, a system-on-chip chip, or the like.

An embodiment of this application further provides a computer program/program product. The computer program/program product is stored in a storage medium. The computer program/program product is executed by at least one processor to implement the procedures in the foregoing gap configuration method embodiments, and same technical effects can be achieved. To avoid repetition, details are not described herein again.

An embodiment of this application further provides a gap configuration system, including a terminal and a network-side device. The terminal may be configured to perform the steps in the gap configuration method described above. The network-side device may be configured to perform the steps in the gap configuration method described above.

It should be noted that the term "include", "comprise", or any other variant thereof in this specification is intended to cover a non-exclusive inclusion, so that a process, a method, an object, or an apparatus that includes a list of elements not only includes those elements but also includes other elements that are not explicitly listed, or further includes elements inherent to such process, method, object, or apparatus. In absence of more constraints, an element preceded by "includes a ..." does not preclude existence of other identical elements in the process, method, object, or apparatus that includes the element. In addition, it should be noted that in the scope of the methods and apparatuses in implementations of this application, an order in which functions are performed is not limited to the shown or discussed order, and may further include an order in which the functions are substantially performed at the same time or a reverse order, depending on the functions related to. For example, the methods described may be performed in different orders than the described orders, and steps may be added, omitted, or combined. In addition, features described with reference to some examples may be combined in other examples.

Based on the descriptions in the foregoing implementations, persons skilled in the art may clearly learn that the methods in the foregoing embodiments may be implemented by a combination of software and a mandatory common hardware platform. Certainly, the methods may be alternatively implemented by hardware. However, the former is a better implementation in many cases. Based on such an understanding, the technical solutions of this application essentially or the part contributing to the conventional technology may be implemented in a form of a computer software product. The computer software product is stored in a storage medium (for example, a ROM/RAM, a magnetic disk, or a compact disc), and includes several instructions for indicating a terminal (which may be a mobile phone, a computer, a server, an air conditioner, a network device, or the like) to perform the methods described in embodiments of this application.

Embodiments of this application are described above with reference to the accompanying drawings. However, this application is not limited to the specific implementations described above, and the specific implementations described above are merely illustrative but not restrictive. Under inspiration of this application, persons of ordinary skill in the art may also make many variations without departing from the purpose of this application and the protection scope of the claims, and such variations all fall within the protection scope of this application.

## Claims

1. A gap configuration method, comprising:
sending, by a terminal, first information to a network-side device, wherein the first information indicates the terminal's priority preference information for a gap.

2. The method according to claim 1, wherein the first information comprises at least one piece of priority preference information that is provided by at least one of the following gap objects:
per gap;
feature or use;
gap type;
gap group; or
per gap under a same feature or a same use.

3. The method according to claim 2, wherein the gap type is one of the following:
a first type, wherein a gap corresponding to the first type is a per-terminal gap;
a second type, wherein a gap corresponding to the second type is a per-frequency-range-1 gap;
a third type, wherein a gap corresponding to the third type is a per-frequency-range-2 gap;
a fourth type, wherein a gap corresponding to the fourth type is an uplink-related gap; or
a fifth type, wherein a gap corresponding to the fifth type is a downlink-related gap.

4. The method according to claim 1, wherein the priority preference information comprises at least one of the following:
a preferred priority level; or
a preferred priority value.

5. The method according to claim 2, wherein the first information is carried by a bitmap, and each bit in the bitmap indicates priority preference information corresponding to a gap object.

6. The method according to claim 2, wherein the gap is at least one of the following gaps:
a gap requested by the terminal;
a gap configured by the network-side device; or
a gap with a corresponding gap identity.

7. The method according to claim 1, wherein the priority preference information comprised in the first information meets at least one of the following:
different gaps correspond to different priority preference information;
gaps with different features or different uses correspond to different priority preference information;
gaps of different gap types correspond to different priority preference information;
gaps in different gap groups correspond to different priority preference information; or
different gaps under a same feature or a same use correspond to different priority preference information.

8. The method according to claim 1, wherein when the first information does not comprise priority preference information corresponding to a first gap object, the priority preference information corresponding to the first gap object is a default priority level or priority value.

9. The method according to claim 1, wherein the first information is carried by at least one of the following messages:
terminal assistance information;
a radio resource control reconfiguration complete message; or
a radio resource control resume complete message.

10. The method according to claim 1, wherein before the sending, by a terminal, first information to a network-side device, the method further comprises:
obtaining, by the terminal, second information from the network-side device, wherein the second information indicates whether the terminal is allowed to send priority preference information for a gap.

11. The method according to claim 10, wherein the second information comprises at least one of the following:
an indication that indicates whether the terminal is allowed to send priority preference information for a gap;
a gap object for which the terminal is allowed to send corresponding priority preference information;
a selection range for priority levels and/or priority values in the priority preference information; or
configuration information for a first timer, configured to indicate the terminal to send the first information when the first timer is not running or after the timer expires, and/or to indicate the terminal to start the first timer after sending the first information.

12. The method according to claim 10, wherein the second information is carried by a radio resource control reconfiguration message.

13. The method according to claim 1, wherein the method further comprises:
obtaining, by the terminal, third information from the network-side device, wherein the third information is used for configuring a priority of a gap for the terminal.

14. The method according to claim 13, wherein the priority of the gap configured for the terminal is the same as or has a same priority relationship with the terminal's priority preference information for the gap.

15. A gap configuration apparatus, comprising:
a first execution module, configured to determine priority preference information for a gap; and
a first transmission module, configured to send first information to a network-side device, wherein the first information indicates the priority preference information for the gap.

16. A gap configuration method, comprising:
receiving, by a network-side device, first information from a terminal, wherein the first information indicates the terminal's priority preference information for a gap.

17. The method according to claim 16, wherein the first information comprises at least one piece of priority preference information that is provided by at least one of the following gap objects:
per gap;
feature or use;
gap type;
gap group; or
per gap under a same feature or a same use.

18. The method according to claim 17, wherein the gap type is one of the following:
a first type, wherein a gap corresponding to the first type is a per-terminal gap;
a second type, wherein a gap corresponding to the second type is a per-frequency-range-1 gap;
a third type, wherein a gap corresponding to the third type is a per-frequency-range-2 gap;
a fourth type, wherein a gap corresponding to the fourth type is an uplink-related gap; or
a fifth type, wherein a gap corresponding to the fifth type is a downlink-related gap.

19. The method according to claim 16, wherein the priority preference information comprises at least one of the following:
a preferred priority level; or
a preferred priority value.

20. The method according to claim 17, wherein the first information is carried by a bitmap, and each bit in the bitmap indicates priority preference information corresponding to a gap object.

21. The method according to claim 17, wherein the gap is at least one of the following gaps:
a gap requested by the terminal;
a gap configured by the network-side device; or
a gap with a corresponding gap identity.

22. The method according to claim 16, wherein the priority preference information comprised in the first information meets at least one of the following:
different gaps correspond to different priority preference information;
gaps with different features or different uses correspond to different priority preference information;
gaps of different gap types correspond to different priority preference information;
gaps in different gap groups correspond to different priority preference information; or
different gaps under a same feature or a same use correspond to different priority preference information.

23. The method according to claim 16, wherein when the first information does not comprise priority preference information corresponding to a first gap object, the priority preference information corresponding to the first gap object is a default priority level or priority value.

24. The method according to claim 16, wherein the first information is carried by at least one of the following messages:
terminal assistance information;
a radio resource control reconfiguration complete message; or
a radio resource control resume complete message.

25. The method according to claim 16, wherein before the receiving, by a network-side device, first information from a terminal, the method further comprises:
sending, by the network-side device, second information to the terminal, wherein the second information indicates whether the terminal is allowed to send priority preference information for a gap.

26. The method according to claim 25, wherein the second information comprises at least one of the following:
an indication that indicates whether the terminal is allowed to send priority preference information for a gap;
a gap object for which the terminal is allowed to send corresponding priority preference information;
a selection range for priority levels and/or priority values in the priority preference information; or
configuration information for a first timer, configured to indicate the terminal to send the first information when the first timer is not running or after the timer expires, and/or to indicate the terminal to start the first timer after sending the first information.

27. The method according to claim 25, wherein the second information is carried by a radio resource control reconfiguration message.

28. The method according to claim 16, wherein the method further comprises:
sending, by the network-side device, third information to the terminal, wherein the third information is used for configuring a priority of a gap for the terminal.

29. The method according to claim 28, wherein the priority of the gap configured for the terminal is consistent or has a same priority relationship with the terminal's priority preference information for the gap.

30. The method according to claim 28, wherein the sending, by the network-side device, third information to the terminal comprises:
sending, by the network-side device, the third information to the terminal based on priority preference information that corresponds to a gap object meeting a high-priority condition and that is in the first information, wherein
the high-priority condition is at least one of the following:
a priority level corresponding to the gap object is higher than a first level; or
a priority value corresponding to the gap object is lower than a first threshold.

31. The method according to claim 30, wherein the sending, by the network-side device, the third information to the terminal based on priority preference information that corresponds to a gap object meeting a high-priority condition and that is in the first information comprises performing at least one of the following:
ignoring, by the network-side device, a gap that corresponds to a gap object not meeting the high-priority condition and that is in the first information;
skipping, by the network-side device, configuring a gap that corresponds to a gap object not meeting the high-priority condition for the terminal; or
preferentially configuring, by the network-side device, a gap that corresponds to a gap object meeting the high-priority condition for the terminal.

32. A gap configuration apparatus, comprising:
a second transmission module, configured to receive first information from a terminal; and
a second execution module, configured to determine the terminal's priority preference information for a gap from the first information.

33. A terminal, comprising a processor and a memory, wherein the memory stores a program or instructions that are executable on the processor, and when the program or instructions are executed by the processor, steps in the gap configuration method according to any one of claims 1 to 14 are performed.

34. A network-side device, comprising a processor and a memory, wherein the memory stores a program or instructions that are executable on the processor, and when the program or instructions are executed by the processor, steps in the gap configuration method according to any one of claims 16 to 31 are performed.

35. A readable storage medium, wherein the readable storage medium stores a program or instructions, and when the program or instructions are executed by a processor, steps in the gap configuration method according to any one of claims 1 to 14 or steps in the gap configuration method according to any one of claims 16 to 31 are performed.
